# EUROPÄISCHE PATENTSCHRIFT

(11) **EP 0 383 240 B1**
(45) Veröffentlichungstag und Bekanntmachung des Hinweises auf die Patenterteilung: **19.05.1993**
(21) Anmeldenummer: 90102733.4
(22) Anmeldetag: 12.02.1990
(51) Int. Cl.: E04F 15/024, H02G 3/28

(54) **Hohlraum Montage Boden**
Sectional false floor
Faux plancher surélevé

(30) Priorität: 13.02.1989 DE 3904236
(43) Veröffentlichungstag der Anmeldung: 22.08.1990
(73) Patentinhaber: Rheinhold & Mahla AG, 80992 München (DE)
(72) Erfinder: Micko, Manfred, D-8057 Eching (DE)
(74) Vertreter: Michelis, Theodor

(56) Entgegenhaltungen:
- EP-A- 0 178 275
- EP-A- 0 191 868
- WO-A-87/03324
- DE-A- 3 721 195
- GB-A- 1 263 731
- US-A- 4 736 555

## Beschreibung

Die Erfindung bezieht sich auf einen Hohlraum-Montage-Boden mit quadratischen Bodenplatten identischer Größe und zwischen den Bodenplatten und dem Fußboden angeordneten Abstützelementen zur Auflagerung der Bodenplatten, wobei die Abstützelemente aus unterhalb der Bodenplattenkanten verlaufenden und jeweils angenähert die doppelte Länge einer Bodenplatte aufweisenden Traversen bestehen.

Ein derartiger Hohlraumboden ist aus der DE-A-37 21 195 bekannt. Hierbei sind die Traversen jedoch noch über gesonderte sogenannte Doppelbodenstützen abgestützt, um damit einen größeren Abstand zwischen den Bodenplatten und dem Fußboden zu erreichen, so daß damit auch größere Versorgungsleitungen unterhalb der Bodenplatten verlegt werden können.

Oftmals brauchen jedoch nur elektrische Kabel unterhalb der Bodenplatten verlegt zu werden, so daß nur ein geringer Abstand zwischen dem Fußboden und den Bodenplatten erforderlich ist, die Kabel aber leicht zugänglich sein sollen.

In diesem Zusammenhang ist es aus der US-A-4 736 555 bekannt, unter den Ecken von vier aneinanderstoßenden Platten Abstützelemente vorzusehen, die aus einem kastenförmigen Teil mit einer Bodenplatte und einem nach unten offenen, U-förmigen Aufsatz bestehen und auf ihrer Oberseite Abstandsschrauben zur Halterung der Bodenplatten aufweisen. Diese separaten und einzeln gefertigten Abstützelemente werden dann über in diese eingehakten schmalen Blechstreifen untereinander auf Abstand gehalten und in ihrer Lage arretiert.

Ferner sind aus der EP-A-0 178 275 Abstützelemente bekannt, die aus U-förmig gebogenen Profilen bestehen, deren nach oben abragende Schenkel in vorgegebenen Abständen Einschnitte aufweisen, um entweder quer verlaufende Traversen aufzunehmen oder Öffnungen für Kabelführungen zu bilden. Derartige Profile erfordern jedoch einen relativ hohen Materialaufwand und bieten darüberhinaus nur eine beschränkte Freizügigkeit für die Verlegung von Kabeln unterhalb der Bodenplatten.

Der vorliegenden Erfindung liegt demgegenüber die Aufgabe zugrunde, einen Hohlraum-Montage-Boden zu schaffen, bei dem die Bodenplatten nur mit geringfügigem Abstand oberhalb des Fußbodens verlaufen und bei dem die Abstützelemente für die Bodenplatten sehr einfach aufgebaut und zu montieren und zu demontieren sind, wobei darüberhinaus eine gute Zugänglichkeit und freie Verfügbarkeit des Hohlraumes unter den Bodenplatten sichergestellt ist.

Zur Lösung dieser Aufgabe ist erfindungsgemäß vorgesehen, daß die Traversen aus angenähert flach auf dem Boden liegende Profile mit lediglich einer mittigen, die gleiche Breite wie die Traversen aufweisenden und im Verlauf der Traversen angeordneten, U-förmigen Aufkantungen zur Abstützung von vier Plattenecken ausgebildet und derart rasterförmig angeordnet sind, daß beiderseits einer mittigen Aufkantung einer Traverse im rechten Winkel dazu jeweils weitere, gleichartig gestaltete Traversen angesetzt sind und daß die Traversen an ihren flach ausgebildeten Enden jeweils zwei hochgebogene Stege aufweisen, die in von den vertikalen Abschnitten der mittigen, U-förmigen Aufkantungen ausgeschnittenen und flach nach innen gebogenen Laschen anschließender Traversen eingreifen.

Mit einer derartigen Ausbildung und Anordnung der Traversen wird also ein rasterförmiges Abstützsystem aus einfach aufgebauten, aber dennoch sehr stabilen Einzelelementen geschaffen, mit dem die Platten exakt gehaltert werden können und wobei bis auf die Abstützpunkte selbst eine freie Verlegung von Versorgungskabeln möglich ist.

Zur Traglasterhöhung des Bodens kann jede Traverse beidseitig der mittigen Aufkantung je eine weitere Aufkantung zur Abstützung der Kantenmitte zweier benachbarter Bodenplatten aufweisen.

Die Aufkantungen können dabei integral in die Traversen eingeformt oder als individuelle, austauschbare Bauteile auf die Traversen aufgesetzt und arretiert sein.

Zur seitlichen Lagefixierung der Bodenplatten kann ferner jede Aufkantung zusätzliche Arretierungsmittel aufweisen.

Diese Arretierungsmittel können aus einem auf jeder Aufkantung mittig verlaufenden Steg bestehen, an dem die schräg angefasten Seiten kanten einer Bodenplatte anliegen.

Dieser Steg ist zweckmäßigerweise auf einer gesonderten, auf die Aufkantung aufgesetzten Platte aus Kunststoff angeformt.

Zur besseren Arretierung kann dabei jede Platte an zwei gegenüberliegenden Stirnseiten die seitlichen Kanten eines Aufkantungs-Rückenabschnittes umfassende, einschnappbare Ansätze aufweisen und der Steg jeweils in Längsrichtung der Traverse verlaufen.

Dabei können die auf die mittigen Aufkantungen aufgesetzten Platten jeweils zwei mittige, sich kreuzende Stege aufweisen.

Anhand einer schematischen Zeichnung sind Aufbau und Funktionsweise eines Ausführungsbeispiels nach der Erfindung näher erläutert. Dabei zeigen:
- Fig. 1: eine perspektivische Ansicht mehrerer rasterförmig angeordneter Traversen,
- Fig. 2: eine vergrößerte Darstellung einer Traverse mit aufgesetzten Arretierungsmitteln und
- Fig. 3: einen Querschnitt durch eine Aufkantung mit arretierter Stegplatte.

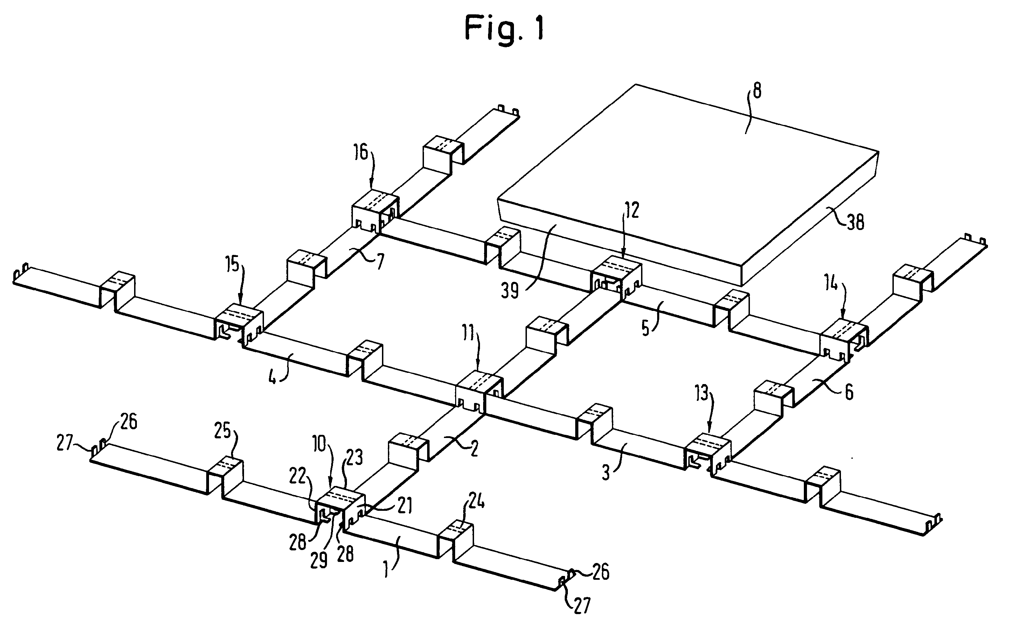

In Fig. 1 ist eine Aufsicht auf einen Ausschnitt des erfindungsgemäßen Rastersystems mit sieben Traversen 1 bis 7 und den sich dabei ergebenden Kreuzungspunkten 10 bis 16 gezeigt, wie im einzelnen noch erläutert wird.

Alle Traversen sind dabei gleichartig aufgebaut und weisen in etwa die doppelte Länge einer Kante der aufzulegenden Bodenplatte 8 auf. Anhand der Traverse 1 sei deren Gestaltungen im einzelnen erläutert. Diese Traverse 1 besteht aus einem ebenen Profil, aus Blech oder faserverstärktem Kunststoff das flach auf dem Boden liegt und mindestens eine mittige, U-förmige Aufkantung 10, die gleichzeitig als Kreuzungspunkt dient, aufweist. Diese Aufkantung besteht dabei aus den beiden seitlichen vertikalen Stegen 21 und 22 von der Höhe des gewünschten Abstandes der Bodenplatte vom Fußboden sowie dem horizontalen Rückenabschnitt 23 von der Breite des Traversen-Blechprofils 1.

Beiderseits dieser mittigen Aufkantung 10 sind im Zuge der Traverse 1 noch zwei weitere Aufkantungen 24 und 25 vorgesehen, die die Mitte einer Plattenkante abstützen und schmaler als die mittige Aufkantung 10 sein können.

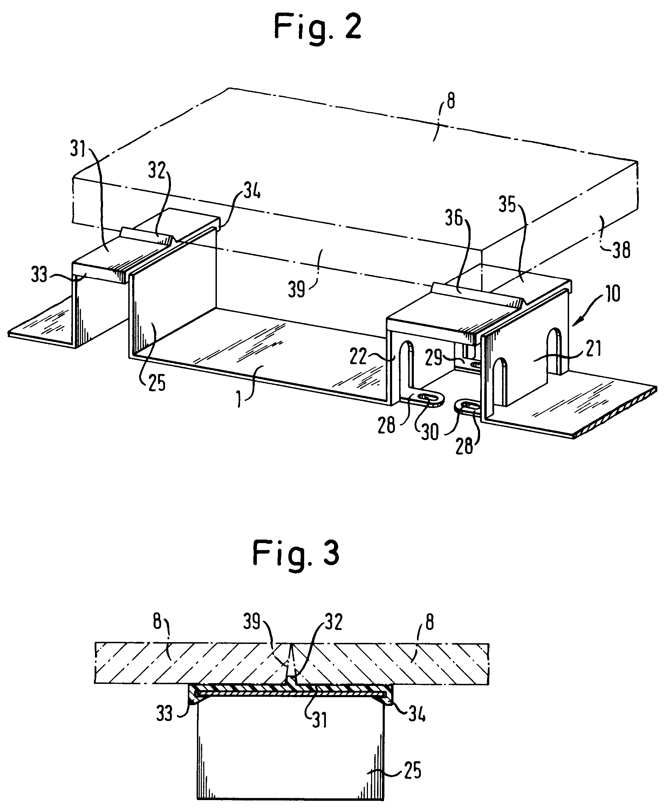

Die flach ausgebildeten Enden der Traverse 1 weisen zur Verbindung mit benachbarten querverlaufenden Traversen jeweils zwei hochgebogene Stege 26 und 27 auf. Zur Arretierung sind dann - wie man auch aus der vergrößerten Darstellung nach Fig. 2 ersieht - aus den vertikalen Abschnitten 21 und 22 der mittleren Aufkantung 10 jeweils zwei Laschen 28 und 29 ausgeschnitten und flach nach innen gebogen, in deren Schlitze 30 dann die entsprechenden Stege 26 und 27 von unten eingreifen.

Auf diese Weise werden jeweils an eine mittige Aufkantung einer Traverse beidseitig im rechten Winkel je eine weitere Traverse unmittelbar ohne gesondertes Zwischenstück angeschlossen. Bei der Darstellung nach Fig. 1 sieht man das besonders deutlich bei der in der Mitte liegenden Traverse 2, an deren mittiger Aufkantung 11 nach hinten die Traverse 4 und nach vorn die Traverse 3 angeschlossen sind, von deren mittigen Aufkantungen 15 und 13 jeweils die Traversen 7 und 6 ausgehen, während am vorderen Ende der Traverse 2 die Traverse 1 über ihre mittige Aufkantung 10 und am hinteren Ende die Traverse 5 über ihre mittige Aufkantung 12 angeschlossen ist. Diese Traverse 5 greift dann mit ihren Enden einmal in die Aufkantung 16 der Traverse 7 und zum anderen in die Aufkantung 14 der Traverse 6 ein.

Die Bodenplatte 8 kann dann z.B. auf das von den Traversen 2, 3, 6 und 5 gebildete Rasterquadrat auf deren Kreuzungspunkte 11, 12, 13 und 14 aufgelegt und damit sicher abgestützt werden.

Zur Fixierung der Bodenplatten in horizontaler Richtung und zum Vermeiden eines seitlichen Verrutschens können die einzelnen Aufkantungen noch mit Arretierungsmitteln versehen sein, wie das in Fig. 2 und 3 im einzelnen näher dargestellt ist.

Dabei ist auf die seitliche Aufkantung 25 eine Platte 31, z.B. aus Kunststoff, aufgelegt, die einen in Längsrichtung der Traverse 1 verlaufenden mittigen Steg 32 trägt.

Die Platte 31 weist - wie man insbesondere aus Fig. 3 ersieht - an ihren Stirnkanten nach unten ragende Stege 33 und 34 mit einem nach innen gerichteten, spitz zulaufenden Ansatz auf, womit die Platte 31 beim Aufsetzen fest am Rückenabschnitt der Aufkantung 25 einrastet und festsitzt.
Die auf der mittigen Aufkantung 10 aufgesetzte Platte 35 weist die gleiche Konfiguration, aber eine größere Breite auf.
Die von den Platten 31 und 35 abragenden Stege 32 bzw. 36 verlaufen alle jeweils in Längsrichtung der zugehörigen Traversen. Damit ergibt sich insgesamt ein Stegverlauf, wie er in Fig. 1 gestrichelt auf den einzelnen Aufkantungen angegeben ist.

Die Bodenplatten 8, deren Seitenkanten 38 und 39 zweckmäßigerwiese schräg nach innen angefast sind, werden nun so aufgelegt, daß ihre Vorderkante 39 an Stege 36 der Aufkantung 10 und an der Aufkantung 25 von hinten gegen den Steg 32 anliegt. Die Bodenplatte 8 liegt dann auf allen vier Seiten an entsprechenden Stegen der anderen Traversen an, so daß sie in ihrer Lage gesichert und fest gehaltert ist. Durch die Anfasung der Seitenkanten 38 und 39 stoßen aneinanderliegende Bodenplatten mit ihrer Oberfläche auch dicht aneinander an, da die Stege 32 bzw. 36 nur von unten in den durch die Anfasung gebildeten Spalt eingreifen, wie man insbesondere aus Fig. 3 ersieht.

Bei dem dargestellten Ausführungsbeispiel sind die Aufkantungen 10 bis 16 bzw. 24 und 25 integral in die Traversen 1 bis 7 eingeformt, so daß die Traversen praktisch immer brückenförmige Ausbuchtungen aufweisen. Es ist aber auch möglich - was jedoch in der Zeichnung nicht gesondert dargestellt ist -, daß die Aufkantungen als gesonderte, austauschbare Bauteile auf glatt durchgehende Traversen aufgesetzt und arretiert sind. Damit ergibt sich eine ähnliche starre Zuordnung sowie Halterung für die aufzulegenden Bodenplatten.

Mit der beschriebenen Gestaltung und Anordnung dieser Traversen ist also auf einfache Weise ein Hohlraum-Montage-Boden zu schaffen, dessen Bodenplatten exakt zueinander und im gleichmäßigen Abstand vom eigentlichen Fußboden gelagert sind, wobei der verbleibende Hohlraum für Versorgungsleitungen durch die erfindungsgemäßen Aufkantungen nur geringfügig eingeschränkt ist.

## Patentansprüche

1. Hohlraum-Montage-Boden mit quadratischen Bodenplatten (8) identischer Größe und zwischen den Bodenplatten (8) und dem Fußboden angeordneten Abstützelementen (10-16) zur Auflagerung der Bodenplatten (8), wobei die Abstützelemente (10-16) aus unterhalb der Bodenplattenkanten (38, 39) verlaufenden und jeweils angenähert die doppelte Länge einer Bodenplatte (8) aufweisenden Traversen (1-7) bestehen, wobei die Traversen (1-7) als angenähert flach auf dem Boden liegende Profile mit lediglich einer mittigen, die gleiche Breite wie die Traversen (1-7) aufweisenden und im Verlauf der Traversen (1-7) angeordneten, U-förmigen Aufkantungen (10-16) zur Abstützung von vier Plattenecken ausgebildet und derart rasterförmig angeordnet sind, daß beiderseits einer mittigen Aufkantung (11) einer Traverse (2) im rechten Winkel dazu weitere, gleichartig gestaltete Traversen (3; 4) angesetzt sind und daß die Traversen (1-7) an ihren flach ausgebildeten Enden jeweils zwei hochgebogene Stege (26, 27) aufweisen, die in von den vertikalen Abschnitten (21, 22) der mittigen, U-förmigen Aufkantungen (10) ausgeschnittenen und flach nach innen gebogenen Laschen (28, 29) anschließender Traversen eingreifen.

2. Hohlraum-Montage-Boden nach Anspruch 1, dadurch gekennzeichnet, daß jede Traverse (1-7) beidseitig der mittigen Aufkantung (10) je eine weitere Aufkantung (24, 25) zur Abstützung der Kantenmitte zweier benachbarter Bodenplatten (8) aufweist.

3. Hohlraum-Montage-Boden nach Anspruch 1 oder 2, dadurch gekennzeichnet, daß die Aufkantungen (10-16; 24, 25) integral in die Traversen (1-7) eingeformt sind.

4. Hohlraum-Montage-Boden nach Anspruch 1 oder 2, dadurch gekennzeichnet, daß die Aufkantungen (10-16; 24, 25) als gesonderte, austauschbare Bauteile auf die Traversen (1-7) aufgesetzt und arretiert sind.

5. Hohlraum-Montage-Boden nach Anspruch 1 oder 2, dadurch gekennzeichnet, daß jede Aufkantung (10; 24, 25) Arretierungsmittel zur seitlichen Lagefixierung der Bodenplatten (8) aufweist.

6. Hohlraum-Montage-Boden nach Anspruch 5, dadurch gekennzeichnet, daß die Arretierungsmittel aus einem auf jeder Aufkantung (10; 24, 25) mittig verlaufenden Steg (32; 36, 37) bestehen, an den die schräg angefasten Seitenkanten (38, 39) einer Bodenplatte (8) anliegen.

7. Hohlraum-Montage-Boden nach Anspruch 6, dadurch gekennzeichnet, daß der Steg (32; 36) auf einer gesonderten, auf die Aufkantung (25, 26; 10) aufgesetzte Platte (31; 35) aus Kunststoff geformt ist.

8. Hohlraum-Montage-Boden nach Anspruch 7, dadurch gekennzeichnet, daß jede Platte (31; 35) an zwei gegenüberliegende Stirnseiten die seitlichen Kanten eines Aufkantungs-Rückenabschnittes (25) umfassende, einschnappbare Ansätze (33, 34) aufweist und daß der Steg (32; 26) jeweils in Längsrichtung der Traverse (1-7) verläuft.

9. Hohlraum-Montage-Boden nach Anspruch 7 oder 8, dadurch gekennzeichnet, daß die auf die mittigen Aufkantungen (10-16) aufgesetzten Platten (35) zwei mittige, sich kreuzende Stege aufweisen.

10. Hohlraum-Montage-Boden nach Anspruch 1, dadurch gekennzeichnet, daß die Traversen (1-7) aus Blechprofilen bestehen.

11. Hohlraum-Montage-Boden nach Anspruch 1, dadurch gekennzeichnet, daß die Traversen (1-7) aus faserverstärktem Kunststoff bestehen.

## Claims

1. Cavity assembly floor having square flooring panels (8) of identical size and bearing elements (10-16) disposed between the flooring panels (8) and the floor for supporting the flooring panels (8), said bearing elements (10-16) comprising cross members (1-7) which extend below the flooring panel edges (38, 39) and are each approximately twice the length of a flooring panel (8), wherein the cross members (1-7) take the form of sections, which lie approximately flat on the floor and have only one central U-shaped set-on-edge portion (10-16), of the same width as the cross members (1-7), disposed in the course of the cross members (1-7) for supporting four panel corners, and are disposed in a grid-like manner in such a way that further identically shaped cross members (3; 4) are added on either side of and at right angles to a central set-on-edge portion (11) of a cross member (2), and that the cross members (1-7) have at each of their flat ends two bent-up webs (26, 27) which engage into clips (28, 29) of adjoining cross members, said clips being cut out from the vertical portions (21, 22) of the central U-shaped set-on-edge portions (10) and bent flatly inwards.

2. Cavity assembly floor according to claim 1, characterized in that each cross member (1-7) has, on each side of the central set-on-edge portion (10), a further set-on-edge portion (24, 25) for supporting the middle of the edge of two adjacent flooring panels (8).

3. Cavity assembly floor according to claim 1 or 2, characterized in that the set-on-edge portions (10-16; 24, 25) are integrally formed in the cross members (1-7).

4. Cavity assembly floor according to claim 1 or 2, characterized in that the set-on-edge portions (10-16; 24, 25) are placed as separate exchangeable structural members onto the cross members (1-7) and fixed thereon.

5. Cavity assembly floor according to claim 1 or 2, characterized in that each set-on-edge portion (10; 24, 25) has locking means for laterally firing the position of the flooring panels (8).

6. Cavity assembly floor according to claim 5, characterized in that the locking means comprise a web (32; 36, 37), which extends centrally along each set-on-edge portion (10; 24, 25) and against which the obliquely chamfered side edges (38, 39) of a flooring panel (8) lie.

7. Cavity assembly floor according to claim 6, characterized in that the web (32; 36) is formed on a separate plastic panel (31; 35) which is placed onto the set-on-edge portion (25, 26; 10).

8. Cavity assembly floor according to claim 7, characterized in that each panel (31; 35) has, at two opposing faces, snap-in lugs (33, 34) which embrace the side edges of a set-on-edge back portion (25), and that the web (32; 26) in each case extends longitudinally of the cross member (1-7).

9. Cavity assembly floor according to claim 7 or 8, characterized in that the panels (35) placed onto the central set-on-edge portions (10-16) have two central intersecting webs.

10. Cavity assembly floor according to claim 1, characterized in that the cross members (1-7) comprise sheet metal sections.

11. Cavity assembly floor according to claim 1, characterized in that the cross members (1-7) are made of fibre-reinforced plastic.

## Revendications

1. Faux plancher de montage comportant des dalles (8) carrées de même dimension et des supports (10 à 6) entre les dalles (8) et le plancher pour supporter les dalles (8), les supports (10 à 16) étant constitués de traverses (1 à 7), qui s'étendent en-dessous des bords (38,39) des dalles et qui ont chacune approximativement une longueur double de celle d'une dalle (8), les traverses (1 à 7) étant constituées sous la forme de profilés posés sensiblement à plat sur le plancher et comportant seulement un étrier (10 à 16) au milieu, en forme de U, de même largeur que les traverses (1 à 7), et disposé dans l'étendue des traverses (1 à 7) pour supporter quatre sommets de dalles, ces étriers formant un réseau de telle sorte que de part et d'autre d'un étrier (11) d'une traverse (2) sont montées, à angle droit par rapport à cette traverse, d'autres traverses (3;4) de forme identique et que les traverses (1 à 7) comportent sur leurs extrémités plates, respectivement deux barrettes coudées vers le haut (26,27), qui pénètrent dans des pattes (28,29) de traverses suivantes, découpées dans des parties verticales (21,22) des étriers (10) en forme de U et rabattues à plat vers l'intérieur.

2. Faux plancher de montage suivant la revendication 1, caractérisé par le fait que chaque traverse (1 à 7) a, de part et d'autre de l'étrier (10), d'autres étriers (24,25) servant à supporter le milieu des côtés de deux dalles voisines (8).

3. Faux plancher de montage suivant la revendication 1 ou 2, caractérisé par le fait que les étriers (10 à 16 ; 24,25) sont d'une seule pièce avec les traverses (1 à 7).

4. Faux plancher de montage suivant la revendication 1 ou 2, caractérisé par le fait que les étriers (10 à 16 ; 24, 25) sont posés et bloqués sur les traverses (1 à 7), en tant qu'éléments constitutifs distincts remplaçables.

5. Faux plancher de montage suivant la revendication 1 ou 2, caractérisé par le fait que chaque étrier (10;24,25) possède des moyens de blocage servant à immobiliser latéralement en position les dalles (8).

6. Faux plancher de montage suivant la revendication 5, caractérisé par le fait que les moyens de blocage sont constitués d'une barrette (32;36,37), qui s'étend au milieu de chaque étrier (10;24,25) et sur laquelle s'appliquent les côtés biseautés (38,39) d'une dalle (8).

7. Faux plancher de montage suivant la revendication 6, caractérisé par le fait que la barrette (32;36) est formée sur une plaque (31;35) distincte, en matière plastique et montée sur l'étrier (25,26;10).

8. Faux plancher de montage suivant la revendication 7, caractérisé par le fait que chaque plaque (31;35) possède, sur deux faces frontales opposées, des appendices encliquetables (33,34), qui enserrent les bords latéraux du dos (25) d'un étrier, et que la barrette (32;36) s'étend respectivement dans la direction longitudinale des traverses (1 à 7).

9. Faux plancher de montage suivant la revendication 7 ou 8, caractérisé par le fait que les plaques (35), qui sont montées sur les étriers (10 à 16), possèdent deux barrettes médianes qui se croisent.

10. Faux plancher de montage suivant la revendication 1, caractérisé par le fait que les traverses (1 à 7) sont constituées de profilés en tôle.

11. Faux plancher de montage suivant la revendication 1, caractérisé par le fait que les traverses (1 à 7) sont en une matière plastique renforcée par des fibres.
